# EUROPÄISCHE PATENTSCHRIFT

(11) **EP 0 994 653 B1**
(45) Veröffentlichungstag und Bekanntmachung des Hinweises auf die Patenterteilung: **27.11.2002**
(21) Anmeldenummer: 99924902.2
(22) Anmeldetag: 07.05.1999
(51) Int. Cl.: A22C 11/08

(54) **FÜLLMASCHINE FÜR WURSTBRÄT O. DGL. MIT EINEM ABKLAPPBAREN VORRATSBEHÄLTER**
FILLING MACHINE FOR SAUSAGE MEAT OR THE LIKE COMPRISING A HOPPER WHICH CAN BE TILTED OUTWARD
MACHINE DE REMPLISSAGE POUR CHAIR A SAUCISSE OU ANALOGUE, COMPORTANT UN RESERVOIR RABATTABLE

(30) Priorität: 08.05.1998 DE 29808373 U
(43) Veröffentlichungstag der Anmeldung: 26.04.2000
(73) Patentinhaber: VEMAG Maschinen- und Anlagenbau GmbH, 27283 Verden (DE)
(72) Erfinder: PASSOKE, Helmut, D-27324 Eystrup (DE); FRERICHS, Heyo, D-27283 Verden (DE)
(74) Vertreter: Speiser, Dieter K.
(86) Internationale Anmeldenummer: EP9903143
(87) Internationale Veröffentlichungsnummer: WO99057987

(56) Entgegenhaltungen:
- EP-A- 0 313 123
- EP-A- 0 511 608
- DE-B- 1 136 605
- DE-U- 9 105 198
- DE-U- 29 714 951
- GB-A- 1 056 529
- US-A- 4 895 278

## Beschreibung

Die Erfindung betrifft eine Füllmaschine mit einem Maschinengestell und einem aus einer Betriebs- in eine abgeklappte Stellung schwenkbaren Vorratsbehälter, vor dessen Ausgang eine drehend angetriebene Zubringeinrichtung zusammen mit diesem abklappbar angeordnet ist.

Solche Füllmaschinen dienen beispielsweise dazu, Wurstbrät oder ähnliches z.B. in Wursthüllen einzufüllen. Bekannte Füllmaschinen weisen ein Maschinengestell auf, in dem sich eine Förderpumpe für beispielsweise Wurstbrät befindet, welche aus einem meist trichterförmigen Vorratsbehälter gespeist wird. Dieser Vorratsbehälter ragt in der Regel hoch über das Maschinengestell auf und ist mit einer wendelförmigen Zubringeinrichtung ausgestattet, die sich entlang der Wand des Vorratsbehälters erstreckt und deren Durchmesser gegebenenfalls wie der Durchmesser des Vorratsbehälters nach oben hin zunimmt. Die Zubringeinrichtung ist angetrieben und fördert beispielsweise an der Wand des Vorratsbehälters haftendes Brät im Vorratsbehälter nach unten zur Förderpumpe hin.

Da der Vorratsbehälter in der Regel hoch über das Maschinengestell aufragt und somit den Zugang beispielsweise zur Förderpumpe stark behindert, wird der Vorratsbehälter häufig seitlich abklappbar ausgeführt. Die Zubringeinrichtung wird dabei zusammen mit dem Vorratsbehälter verschwenkt. Das Abklappen des Vorratsbehälters ist beispielsweise dann erforderlich, wenn der untere Teil des Förderweges oder die Förderpumpe gereinigt werden müssen.

Es gibt Anwendungsfälle, in denen der Einsatz einer Zubringeinrichtung nicht gewünscht ist. Für solche Fälle und zum Zwecke der Reinigung sollte die Zubringeinrichtung demontierbar sein. Die Summe der gewünschten Anforderungen, nämlich Klappbarkeit des Vorratsbehälters samt Zubringeinrichtung, Demontierbarkeit der Zubringeinrichtung sowie Antrieb und Lagerung der Zubringeinrichtung stellen hohe Anforderungen an die Konstruktion einer Füllmaschine.

Diesen Anforderungen wird eine Füllmaschine gerecht, bei der die Zubringeinrichtung mit einem Zahnkranz verbunden ist, der im unteren Teil eines abklappbaren Vorratsbehälters lösbar gelagert ist und der in der Betriebsstellung des Vorratsbehälters - wenn dieser nicht abgeklappt ist - in das Ritzel eines Antriebes eingreift, der im Maschinengestell untergebracht ist.

Unbefriedigend bei diesem Stand der Technik ist, daß die Zubringeinrichtung nur umständlich demontierbar ist und große Kräfte auf den abklappbaren Vorratsbehälter ausgeübt werden.

Ziel der vorliegenden Erfindung ist es daher, eine alternative Füllmaschine anzubieten, die die Nachteile des Standes der Technik weitestgehend vermeidet.

Dieses Ziel wird erfindungsgemäß mit einer Füllmaschine der eingangs genannten Art erreicht, die sich durch einen zweiteiligen Antriebsring für die Zubringeinrichtung auszeichnet, dessen erster Ringteil im Maschinengestell gelagert und dort angetrieben ist und dessen zweiter Ringteil die Zubringeinrichtung trägt sowie zusammen mit dem Vorratsbehälter abklappbar und in der Betriebsstellung des Vorratsbehälters so mit dem ersten Ringteil gekoppelt ist, daß der erste Ringteil auf die Zubringeinrichtung wirkende Kräft aufnimmt und den zweiten Ringteil zum Antreiben der Zubringeinrichtung drehend mitnimmt. Ein großer Vorteil dieser Konstruktion ist, daß auf den Vorratsbehälter selbst bei angetriebener Zubringeinrichtung nur noch solche Kräfte wirken, die von der Zubringeinrichtung mittelbar, beispielsweise durch das Brät auf die Wände des Vorratsbehälters ausgeübt werden. Der Vorratsbehälter muß jedoch nicht die auf die Zubringeinrichtung wirkenden Reaktions- und Antriebskräfte aufnehmen, da diese von dem im Maschinengestell gelagerten ersten Ringteil des Antriebsringes aufgenommen werden. Die Lagerung im Maschinengestell kann ohne weiteres robust ausgeführt werden, da sie im Gegensatz zur Lagerung der Zubringeinrichtung in dem Vorratsbehälter nicht gelöst werden muß. Hieraus ergibt sich ein zweiter großer Vorteil der Erfindung, nämlich daß die Zubringeinrichtung bereits mit einer einfachen Halterung in dem abklappbaren Vorratsbehälter gehalten werden kann. Eine solche einfache Halterung lösbar auszuführen ist wesentlich einfacher, als eine lösbare Lagerung vorzusehen. Die robuste Lagerung der Zubringeinrichtung im Maschinengestell schlägt sich darüber hinaus in einer größeren Zuverlässigkeit der Füllmaschine nieder.

Bevorzugt wird eine Füllmaschine, bei der der zweite Ringteil des Antriebsrings in der Betriebsstellung des Vorratsbehälters so in den ersten Ringteil eingreift, daß der erste Ringteil auf die Zubringeinrichtung wirkende Kräft aufnimmt und den zweiten Ringteil zum Antreiben der Zubringeinrichtung drehend mitnimmt. Durch dieses Eingreifen des zweiten in den ersten Ringteil des Antriebsrings wird eine weitere Kupplung zwischen diesen beiden Ringteilen überflüssig. Gleichzeitig wird auf einfache Art und Weise ein Kraftschluß zwischen diesen beiden Ringteilen hergestellt, durch den sowohl die auf die Zubringeinrichtung wirkenden Reaktions- als auch die Antriebskräfte auf den ersten Ringteil des Tragrings und weiter über dessen Lagerung auf das Maschinengestell übertragen werden können.

Der Antriebsring ist vorzugsweise im wesentlichen horizontal angeordnet und horizontal geteilt. Diese Ausführung ist insbesondere bei über dem Maschinengestell angeordnetem Vorratsbehälter vorteilhaft und führt dazu, daß der erste Ringteil als unterer Teil des Antriebsrings im Maschinengestell gelagert ist, während der zweite Ringteil als oberer Teil des Antriebsrings die Zubringeinrichtung trägt. "Horizontal geteilt" heißt in diesem Zusammenhang, daß sowohl der erste Ringteil als auch der zweite Ringteil einen vollständigen Ring bilden, die jeweils auch vertikale Vorsprünge haben können, so daß sich keine horizontale Trennebene im engeren Sinne ergibt, sondern vielmehr komplexe Trennflächen.

So wird eine Ausführungsform der Füllmaschine bevorzugt, die sich dadurch auszeichnet, daß sowohl der erste als auch der zweite Ringteil Vorsprünge mit in Kreisrichtung dazwischenliegenden Zwischenräumen aufweisen, und daß die Vorsprünge in der Betriebsstellung des Vorratsbehälters zum formschlüssigen Übertragen der Antriebskräfte in die Zwischenräume zwischen den jeweils anderen Vorsprüngen eingreifen. Auf diese Weise wird eine formschlüssige Übertragung der Antriebskraft sichergestellt und Schlupf zwischen den beiden Ringteilen und damit zwischen der Zubringeinrichtung und ihrem Antrieb vermieden.

Die Zwischenräume sind bei der letztgenannten Ausführungsform vorzugsweise größer als die jeweils in sie eingreifenden Vorsprünge. Dadurch ist es besonders leicht, die beiden Ringteile beim Schwenken des Vorratsbehälters aus der abgeklappten Stellung in seine Betriebsstellung so miteinander zu koppeln, daß die Antriebskräfte formschlüssig übertragen werden.

Eine bevorzugte Füllmaschine weist außerdem Zentriermittel zum Zentrieren der Zubringeinrichtung samt des zweiten Ringteils bezüglich des ersten Ringteils auf. Insbesondere zu diesem Zweck ist bei einer bevorzugten Ausführungsform der Füllmaschine vorgesehen, daß der zweite Ringteil einen axialen Fortsatz mit einer zentrischen, sich zum ersten Ringteil hin konisch verjüngenden Umfangsfläche aufweist, die in der Betriebsstellung des Vorratsbehälters in eine entsprechende Aufnahme des ersten Ringteils eingreift. Eine solche konische Umfangsfläche am zweiten Ringteil bewirkt mit einer entsprechenden Gegenfläche am ersten Ringteil nicht nur das Zentrieren der beiden Teile zueinander, sondern ist darüber hinaus auch dazu geeignet, auf die Zubringeinrichtung wirkende axiale und radiale Kräfte über den zweiten Ringteil auf den ersten Ringteil und dessen Lagerung auf das Maschinengestell zu übertragen. Verjüngen sich die Umfangsfläche des zweiten Ringteils sowie die entsprechende Gegenfläche des ersten Ringteils entsprechend geringfügig, können über diese Flächen auch die Antriebskräfte kraftschlüssig vom ersten Ringteil auf den zweiten Ringteil und damit auf die Zubringeinrichtung übertragen werden. Weitere Kupplungsmittel zum Übertragen der Antriebskräfte wären dann überflüssig. Ein Nachteil einer solchen Konusgestaltung könnte jedoch sein, daß der erste und zweite Ringteil so ineinanderklemmen können, daß sie das Abklappen des Vorratsbehälters behindern. Dann wäre eine stärker ausgeprägte Konusform, die lediglich die Zentrierung bewirkt, mit zusätzlichen Kupplungsmitteln zum Übertragen der Antriebskräfte zu bevorzugen.

Eine bevorzugte Füllmaschine weist außerdem Tragelemente auf, die den zweiten Ringteil lösbar an dem schwenkbaren Vorratsbehälter halten und so angeordnet sind, daß sie in der Betriebsstellung des Vorratsbehälters entlastet sind. Diese Tragelemente halten die Zubringeinrichtung somit nur dann, wenn der Vorratsbehälter abgeklappt ist. Sie werden damit im wesentlichen nur durch die Gewichtskraft der Zubringeinrichtung belastet, da die auf die Zubringeinrichtung im Betrieb wirkenden Antriebs- und Reaktionskräfte unmittelbar über den zweiteiligen Antriebsring auf das Maschinengestell übertragen werden. Die Tragelemente können daher entsprechend leicht ausgeführt sein, so daß sich viele Möglichkeiten ergeben, die Halterung des zweiten Ringteils an dem Vorratsbehälter lösbar auszuführen.

Bei einer bevorzugten Variante der Füllmaschine bilden die Tragelemente jedoch die zum Antreiben derZubringeinrichtung dienenden, mitentsprechenden Vorsprüngen des ersten Ringteils zusammenwirkenden Vorsprünge, die von Stiften gebildet werden, die sich im wesentlichen radial vom zweiten Ringteil nach außen erstrekken. Diese Stifte halten somit die Zubringeinrichtung nicht nur in der abgeklappten Stellung des Vorratsbehälters, sondern übertragen auch noch denjenigen Teil der Antriebskräfte vom ersten Ringteil auf den zweiten Ringteil, der nicht anderweitig, beispielsweise über die bereits erwähnte konische Umfangsfläche, am zweiten Ringteil und die entsprechende Gegenfläche am ersten Ringteil übertragen werden. Durch entsprechende Kombination der Merkmale, nämlich einerbestimmten Konizität der Umfangsfläche sowie einer entsprechenden Gestaltung der Stifte, brauchen die Tragelemente nur einen solch geringen Teil der Antriebskräfte zu übertragen, daß die Möglichkeiten bei der Gestaltung einer lösbaren Halterung für den zweiten Ringteil am Vorratsbehälter nicht eingeschränkt werden.

Eine Variante einer Füllmaschine mit einer solchen lösbaren Halterung besteht darin, daß der Vorratsbehälter eine umlaufende, nach innen offene Nut aufweist und Schiebehülsen auf den Tragelementen des zweiten Ringteils vorgesehen sind, die zum Halten des zweiten Ringteils an dem Vorratsbehälter so verschiebbar sind, daß sie in die Nut eingreifen. Eine Alternative hierzu besteht darin, daß der Vorratsbehälter ebenfalls eine umlaufende, nach innen offene Nut aufweist, die Tragelemente an dem zweiten Ringteil jedoch selbst in radialer Richtung derart beweglich sind, daß sie zum Halten des zweiten Ringteils an dem Vorratsbehälter in die Nut eingreifen können. Eine weitere Alternative zeichnet sich durch eine ringförmige Ausnehmung des Vorratsbehälters aus, in welche die Tragelemente einsetzbar sind, sowie durch eine lösbare Abdeckung, mit der die Ausnehmung so abgedeckt werden kann, daß eine um den Vorratsbehälter umlaufende, nach innen offene Nut entsteht, in der die Tragelemente gehalten werden. Alternativ ist es auch möglich, eine nach außen offene Nut im zweiten Ringteil sowie am Vorratsbehälter gelagerte Tragelemente vorzusehen, die in radialer Richtung derart beweglich sind, daß sie in die Nut in dem zweiten Ringteil eingreifen können.

Die Erfindung soll nun anhand eines Ausführungsbeispiels mit Hilfe der Zeichnungen näher erläutert werden. In diesen zeigen:
- Fig. 1: einen abgeklappten Vorratsbehälter einer Füllmaschine samt der benachbarten Maschinenteile der Füllmaschine;
- Fig. 2: eine vergrößerte Ansicht eines Ausschnitts aus Fig. 1;
- Fig. 3: den in Fig. 2 abgebildeten Ausschnitt bei in seiner Betriebsstellung geklapptem Vorratsbehälter;
- Fig. 4: einen vergrößerten Ausschnitt aus Fig. 3; und
- Fig. 5: einen nochmals vergrößerten Ausschnitt aus Fig. 4.

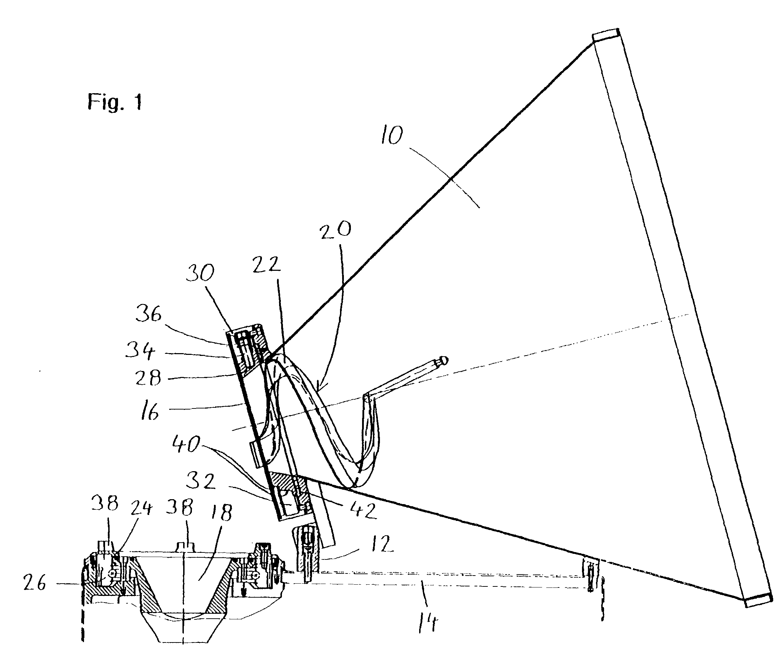

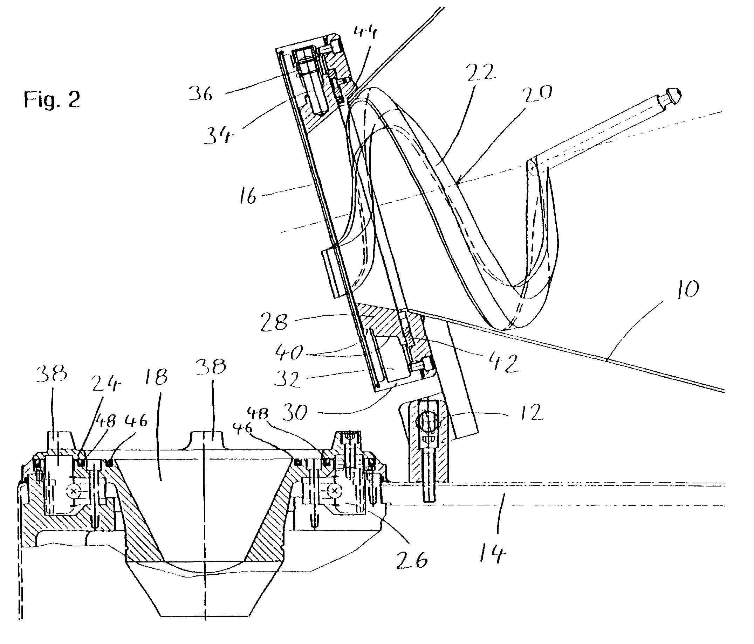

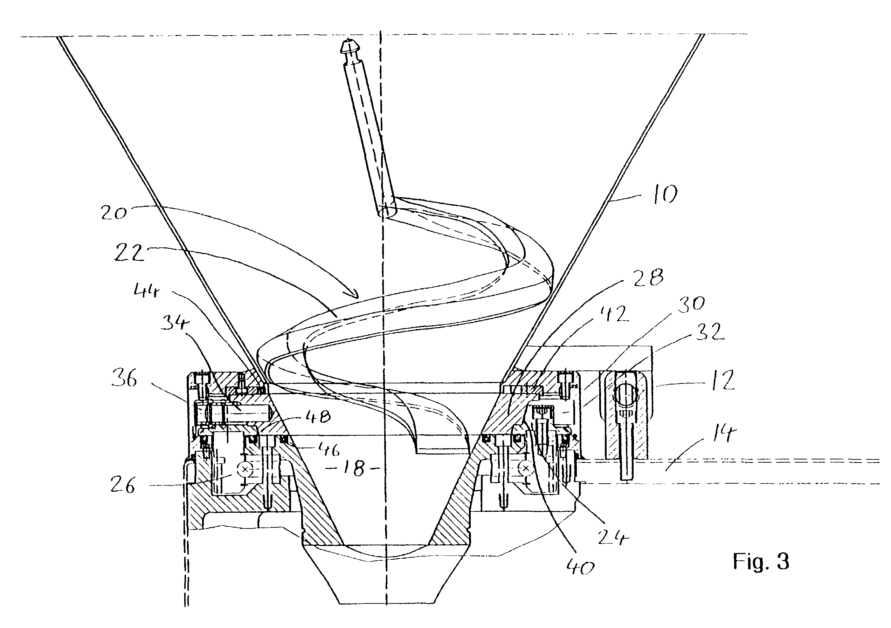

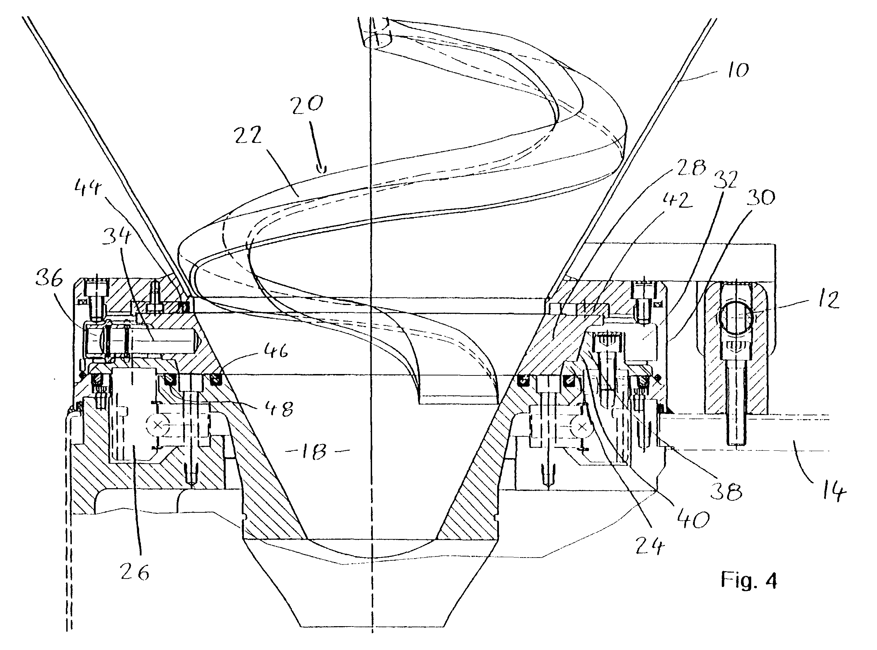

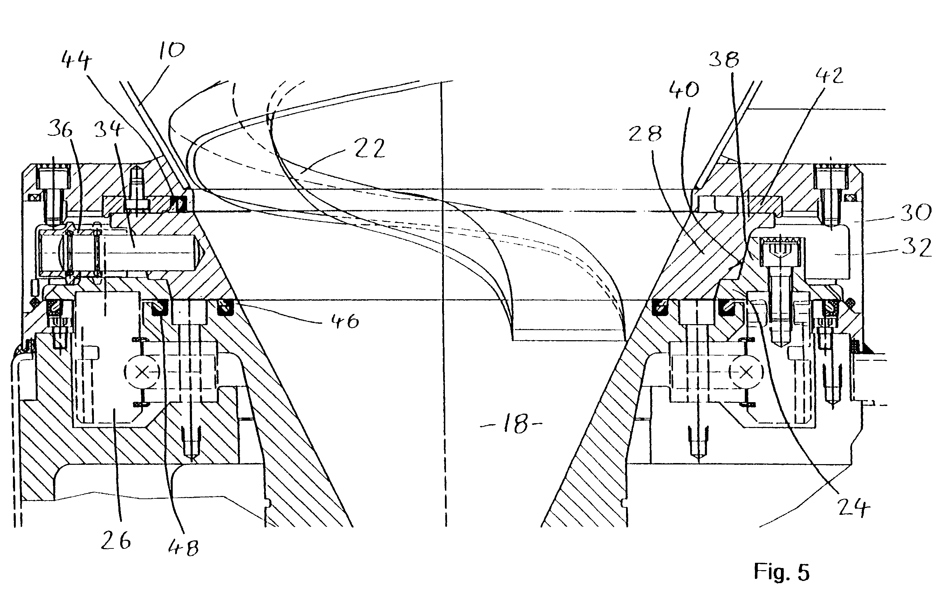

Sämtlichen Figuren sind die wesentlichen Bestandteile der Füllmaschine zu entnehmen. Diese umfassen einen als Vorratsbehälter dienenden Trichter 10, der über ein Klappgelenk 12 am Maschinengestell 14 der Füllmaschine angeschlagen ist. Damit ist der Trichter 10 zwischen einer abgeklappten Stellung, wie in Fig. 1 und 2 abgebildet, und einer Betriebsstellung, wie in den Fig. 3 bis 5 abgebildet, hin- und herschwenkbar.

In seiner Betriebsstellung ist der Trichter 10 von oben befüllbar und weist unten einen offenen Ausgang 16 auf, der in einer ebenfalls trichterförmigen Zuführung 18 mündet, die zu einer nicht dargestellten Förderpumpe der Füllmaschine führt.

Vor seinem Ausgang 16 befindet sich im Inneren des Trichters 10 eine Zubringeinrichtung 20, deren wesentlicher Bestandteil eine wendelförmige Zubringerkurve 22 ist. Diese verläuft in unmittelbarer Nähe zur Innenwand des Trichters 10 und nimmt dementsprechend wie der Trichter nach oben hin im Durchmesser zu. Die Zubringerkurve 22 wird in der Betriebsstellung des Trichters 10 drehend angetrieben und fördert so nach Art einer Förderschnecke im Bereich des Ausgangs 16 des Trichters 10 an dessen Innenwand haftendes Gut zum Ausgang 16. Außerdem kann die Zubringeinrichtung 20 demontiert werden, so daß die Füllmaschine auch ohne die Zubringeinrichtung 20 betrieben werden kann.

Dem Antrieb sowie der Lagerung der Zubringeinrichtung 20 dient ein zweiteiliger Antriebs- und Tragring, dessen erster oder unterer Ringteil 24 zusammen mit einem angeschraubten Zahnkranz 26 in dem Maschinengehäuse 14 gelagert ist. Der Zahnkranz 26 ist außen verzahnt und kann entsprechend über ein nicht dargestelltes Ritzel angetrieben werden.

Ein zweiter oder oberer Ringteil 28 trägt die Zubringeinrichtung 20. Er ist an dem Trichter 10 lösbar gehalten. Dazu weist der Trichter 10 in der Nähe seines Ausgangs 16 einen Kragen 30 mit einer umlaufenden, nach innen offenen Ringnut 32 auf. Am oberen Ringteil 28 sind radial nach außen stehende Stifte befestigt, auf denen jeweils eine Schiebehülse 36 in Längsrichtung des jeweiligen Stiftes 34 verschiebbar angeordnet ist. Die Schiebehülsen 36 können so weit nach außen geschoben werden, daß sie in die Ringnut 32 im Kragen 30 des Trichters 10 eingreifen und auf diese Weise den oberen Ringteil 28 samt Zubringeinrichtung 20 an dem Trichter 10 festhalten. Die Stifte 34 samt ihrer Schiebehülsen 36 dienen somit als Tragelemente zum Halten der Zubringeinrichtung 20 am Trichter 10.

Um die Zubringeinrichtung 20 zu demontieren, müssen die Schiebehülsen 36 auf den Stiften 34 jeweils so weit nach innen geschoben werden, daß sie nicht mehr in die Ringnut 32 am Trichter 10 eingreifen. Dann kann die Zubringeinrichtung 20 samt dem oberen Ringteil 28 durch den Ausgang 16 des Trichters 10 herausgefädelt werden.

In der Betriebsstellung des Trichters 10 sind die beiden Ringteile 24 und 28 miteinander gekoppelt. Zum Übertragen der in tangentialer Richtung wirkenden Antriebskräfte von dem ersten Ringteil 24 auf den zweiten Ringteil 28 weist der erste Ringteil 24 nach oben ragende Vorsprünge 38 mit in Kreisrichtung dazwischenliegenden Zwischenräumen auf. In der Betriebsstellung des Trichters 10 greifen die Stifte 34 am zweiten Teilring 28 in diese Zwischenräume ein. Dreht sich der erste Teilring 24, so stoßen dessen Vorsprünge 38 gegen die Stifte 34 und nehmen auf diese Weise den zweiten Teilring 28 mit. Die Vorsprünge 38 sind so ausgeführt, daß sie nur an den offenen Teil der Stifte 34 stoßen, nicht jedoch an die weiter außen befindlichen Schiebehülsen 36, sofern diese ganz nach außen geschoben sind, so daß sie in die Ringnut 32 eingreifen. Die Übertragung der Antriebskräfte für die Zubringeinrichtung 20 erfolgt somit über den Zahnkranz 26, der mit dem ersten Teilring 24 verschraubt ist, den ersten Teilring 24, dessen Vorsprünge 38, die Stifte 34 am zweiten Teilring 28, den zweiten Teilring 28 auf die Zubringerkurve 22.

Außerdem weist der zweite Teilring 28 weist eine in Betriebsstellung des Trichters 10 nach unten ragende, sich in diese Richtung verjüngende, abgestufte konische Umfangsfläche 40 auf. Die nach innen weisenden Flächen des ersten Teilrings 24 sind zur Umfangsfläche 40 am zweiten Teilring 28 kompatibel ausgebildet, so daß die konische Umfangsfläche 40 des zweiten Teilrings 28 in der Betriebsstellung des Vorratsbehälters 10 an den Innenflächen des ersten Teilrings 24 anliegt. Auf diese Weise wird eine Zentrierung des zweiten Teilrings 28 bezüglich des ersten Teilrings 24 bewirkt. Außerdem stützt sich der zweite Teilring 28 auf diese Weise derart auf dem ersten Teilring 24 ab, daß auf die Zubringeinrichtung 20 axial nach unten oder radial wirkende Kräfte über den zweiten Teilring 28 auf den ersten Teilring 24 übertragen und von dessen Lagerung am Maschinengestell 14 aufgefangen werden.

Beim Betrieb mit angetriebener Zubringeinrichtung 20 kann es vorkommen, daß die Zubringeinrichtung 20 beispielsweise auf Brät in dem Trichter 10 eine nach unten gerichtete Axialkraft ausübt, die die Gewichtskraft der Zubringeinrichtung 20 übersteigt. Die auf die Zubringeinrichtung 20 zurückwirkenden Reaktionskräfte summieren sich dann mit der Gewichtskraft der Zubringeinrichtung 20 zu einer insgesamt nach oben gerichteten Kraft. Diese wird von einem als Gleitlager dienenden Bronzering 42 im Kragen 30 des Trichters 10 aufgefangen. Der Bronzering 42 befindet sich in demjenigen Teil des Kragens 30, der in Betriebsstellung des Trichters 10 im wesentlichen waagerecht verläuft. Er wirkt mit einer planen Fläche auf der Oberseite des zweiten Ringteils 28 zusammen.

Mit Ausnahme des letztgenannten Falls werden von der Zubringeinrichtung 20 keine Kräfte auf den Trichter 10 ausgeübt. Die Kräfte werden vielmehr über die beiden Teilringe 28 und 24 direkt auf das Maschinengestell 14 übertragen. Auf den Trichter 10 wirken somit im wesentlichen nur die beispielsweise von dem Brät in seinem Inneren auf die Trichterinnenwand ausgeübten Kräfte. Außerdem wird die Zubringeinrichtung 20 samt des zweiten Teilrings 28 in Betriebsstellung des Trichters 10 von dem ersten Teilring 24 sowie dem Bronzering 42 in einer festen Position gehalten, so daß der Trichter 10 und der zweite Teilring 28 nicht etwa von den Stiften 34 und den Schiebehülsen 36 getragen werden müssen. Tatsächlich ist die Ringnut 32 so groß bemessen, daß die Schiebehülsen 36 in der Betriebsstellung des Trichters 10 keine der Innenflächen der Nut 32 berühren.

Zur Abdichtung des aus erstem und zweitem Teilring 24 und 28 bestehenden Antriebs- und Tragrings gegenüber dem Kragen 30 des Trichters 10 einerseits sowie gegenüber der am Maschinengestell 14 befestigten Zuführung 18 andererseits sind insgesamt drei Dichtungen 44, 46 und 48 vorgesehen. Es ist bevorzugt, daß alle drei Dichtungen bei abgeklapptem Trichter 10 bzw. demontierter Zubringeinrichtung 20 herausnehmbar sind.

Die Dichtung 44 ist bevorzugt in unmittelbarer Nachbarschaft zum Bronzering 42 angeordnet und liegt an der radial inneren Umfangskante des Bronzerings 42 an, und zwar mit diesem gemeinsam in einer nach unten offenen Ringnut des Kragens 30. Die Dichtung 44 dichtet eine plane Oberseite des zweiten Teilrings 28 gegenüber dem Kragen 30 des Trichters 10 ab.

Die beiden Dichtungen 46 und 48 sind jeweils in eigenen, nach oben offenen Ringnuten in der planen Oberseite der Zuführung 18 eingelassen und sind zueinander konzentrisch angeordnet. Die eine der beiden Dichtungen, Dichtung 46, dichtet eine plane Unterseite des zweiten Ringteils 28 gegenüber der Zuführung 18 ab, während die radial weiter außen liegende Dichtung 48 den ersten Teilring 24 gegenüber der planen Oberseite der Zuführung 18 abdichtet.

## Patentansprüche

1. Füllmaschine mit einem Maschinengestell (14) und einem aus einer Betriebsin eine abgeklappte Stellung schwenkbaren Vorratsbehälter (10), vor dessen Ausgang (16) eine drehend angetriebene Zubringeinrichtung (20) zusammen mit diesem abklappbar angeordnet ist, **gekennzeichnet durch**
einen zweiteiligen Antriebsring für die Zubringeinrichtung (20),
dessen erster Ringteil (24) am Maschinengestell (14) gelagert und dort angetrieben ist, und
dessen zweiter Ringteil (28) die Zubringeinrichtung (20) trägt sowie zusammen mit dem Vorratsbehälter (10) abklappbar und in der Betriebsstellung des Vorratsbehälters (10) so mit dem ersten Ringteil (24) gekoppelt ist, daß der erste Ringteil (24) auf die Zubringeinrichtung (10) wirkende Kräfte aufnimmt und den zweiten Ringteil (28) zum Antreiben der Zubringeinrichtung (20) drehend mitnimmt.

2. Füllmaschine nach Anspruch 1,
**dadurch gekennzeichnet, daß** der zweite Ringteil (28) in der Betriebsstellung des Vorratsbehätters (10) so in den ersten Ringteil (24) eingreift, daß der erste Ringteil (24) auf die Zubringeinrichtung (20) wirkende Kräfte aufnimmt und den zweiten Ringteil (28) zum Antreiben der Zubringeinrichtung (20) drehend mitnimmt.

3. Füllmaschine nach Anspruch 1 oder 2,
**dadurch gekennzeichnet, daß** der Antriebsring im wesentlichen horizontal angeordnet und horizontal geteilt ist.

4. Füllmaschine nach einem der vorhergehenden Ansprüche,
**dadurch gekennzeichnet, daß** sowohl der erste als auch der zweite Ringteil (24, 28) Vorsprünge (34, 38) mit in Kreisrichtung dazwischenliegenden Zwischenräumen aufweisen, und daß die Vorsprünge (34, 38) in der Betriebsstellung des Vorratsbehälters (10) zum formschlüssigen Übertragen der Antriebskräfte in die Zwischenräume zwischen den jeweils anderen Vorsprüngen (34, 38) eingreifen.

5. Füllmaschine nach Anspruch 4,
**dadurch gekennzeichnet, daß** die Zwischenräume größer sind als die jeweils in sie eingreifenden Vorsprünge (34, 38).

6. Füllmaschine nach einem der vorhergehenden Ansprüche,
**gekennzeichnet durch** Zentriermittel zum Zentrieren der Zubringeinrichtung (20) samt des zweiten Ringteils (28) bezüglich des ersten Ringteils (24).

7. Füllmaschine nach einem der vorhergehenden Ansprüche,
**dadurch gekennzeichnet, daß** der zweite Ringteil (28) einen axialen Fortsatz mit einer zentrischen, sich zum ersten Ringteil (24) hin konisch verjüngenden Umfangsfläche (40) aufweist, die in der Betriebsstellung des Vorratsbehälters (10) in eine entsprechende Aufnahme des ersten Ringteils (24) eingreift.

8. Füllmaschine nach einem der vorhergehenden Ansprüche,
**gekennzeichnet durch** Tragelemente (34), die den zweiten Ringteil (28) an dem schwenkbaren Vorratsbehälter (10) lösbar halten und so angeordnet sind, daß sie in der Betriebsstellung des Vorratsbehälters (10) entlastet sind.

9. Füllmaschine nach Anspruch 4 und 8,
**dadurch gekennzeichnet, daß** die Tragelemente (34) sich im wesentlichen radial vom zweiten Ringteil (28) nach außen erstreckende Stifte (34) umfassen, die zum Antreiben der Zubringeinrichtung (20) dienende, mit den entsprechenden Vorsprüngen (38) des ersten Ringteils (24) zusammenwirkende Vorsprünge (34) bilden.

10. Füllmaschine nach Anspruch 8 oder 9,
**gekennzeichnet durch** eine um den Vorratsbehälter (10) umlaufende, nach innen offene Nut (32) und Schiebehülsen (36) auf den Tragelementen (34) des zweiten Ringteils (28), die zum Halten des zweiten Ringteils (28) an dem Vorratsbehälter (10) so verschiebbar sind, daß sie in die Nut (32) eingreifen.

11. Füllmaschine nach Anspruch 8 oder 9,
**gekennzeichnet durch** eine um den Vorratsbehälter (10) umlaufende, nach innen offene Nut (32) sowie **dadurch**, daß die Tragelemente an dem zweiten Ringteil (28) in radialer Richtung derart beweglich sind, daß sie zum Halten des zweiten Ringteils (28) an dem Vorratsbehälter (10) in die Nut (32) eingreifen können.

12. Füllmaschine nach Anspruch 8 oder 9,
**gekennzeichnet durch** eine ringförmige Ausnehmung des Vorratsbehälters, in welche die Tragelemente einsetzbar sind, sowie eine lösbare Abdeckung, mit der die Ausnehmung so abgedeckt werden kann, daß eine um den Vorratsbehälter (10) umlaufende, nach innen offene Nut entsteht, in der die Tragelemente gehalten werden.

13. Füllmaschine nach Anspruch 8,
**gekennzeichnet durch** eine Nut im zweiten Ringteil (28) sowie **dadurch**, daß die Tragelemente am Vorratsbehälter (10) so gelagert und in radialer Richtung be weglich sind, daß sie in die Nut im zweiten Ringteil (28) eingreifen können.

## Claims

1. Filling machine having a machine framework (14) and a supply container (10) which can be pivoted from an operating position into a swung-down position and in front of the outlet (16) of which a rotary feed device (20) is arranged such that it can be swung down with said supply container, **characterized by**
a two-part drive ring for the feed device (20),
of which the first ring part (24) is mounted on the machine framework (14) and is driven there, and
of which the second ring part (28) bears the feed device (20) and can be swung down together with the supply container (10) and, in the operating position of the supply container (10), is coupled to the first ring part (24) such that the first ring part (24) absorbs forces acting on the feed device (10) and carries along the second ring part (28) in rotation in order to drive the feed device (20).

2. Filling machine according to Claim 1, **characterized in that** the second ring part (28), in the operating position of the supply container (10), engages in the first ring part (24) such that the first ring part (24) absorbs forces acting on the feed device (20) and carries along the second ring part (28) in rotation in order to drive the feed device (20).

3. Filling machine according to Claim 1 or 2, **characterized in that** the drive ring is arranged essentially horizontally and divided horizontally.

4. Filling machine according to one of the preceding claims, **characterized in that** both the first and the second ring parts (24, 28) have protrusions (34, 38) with interspaces located therebetween in the circle direction, and **in that** the protrusions (34, 38), in the operating position of the supply container (10), engage in the interspaces between the respectively other protrusions (34, 38) for form-fitting transmission of the driving forces.

5. Filling machine according to Claim 4, **characterized in that** the interspaces are larger than the protrusions (34, 38) engaging in them in each case.

6. Filling machine according to one of the preceding claims, **characterized by** centring means for centring the feed device (20) together with the second ring part (28) in relation to the first ring part (24).

7. Filling machine according to one of the preceding claims, **characterized in that** the second ring part (28) has an axial continuation with a central circumferential surface (40) which tapers conically in the direction of the first ring part (24) and, in the operating position of the supply container (10), engages in a corresponding mount of the first ring part (24).

8. Filling machine according to one of the preceding claims, **characterized by** carrying elements (34) which retain the second ring part (28) releasably on the pivotable supply container (10) and are arranged such that, in the operating position of the supply container (10), they are relieved of loading.

9. Filling machine according to Claims 4 and 8, **characterized in that** the carrying elements (34) comprise pins (34) which extend essentially radially outwards from the second ring part (28) and form protrusions (34) which serve for driving the feed device (20) and interact with the corresponding protrusions (38) of the first ring part (24).

10. Filling machine according to Claim 8 or 9, **characterized by** a groove (32), which runs around the supply container (10) and is open towards the inside, and sliding sleeves (36) on the carrying elements (34) of the second ring part (28) which, for retaining the second ring part (28) on the supply container (10), can be displaced such that they engage in the groove (32).

11. Filling machine according to Claim 8 or 9, **characterized by** a groove (32), which runs around the supply container (10) and is open towards the inside, and in that the carrying elements can be moved radially on the second ring part (28) such that, for retaining the second ring part (28) on the supply container (10), they can engage in the groove (32).

12. Filling machine according to Claim 8 or 9, **characterized by** an annular recess of the supply container, into which the carrying elements can be inserted, and a releasable covering, by means of which the recess can be covered so as to produce a groove which runs around the supply container (10), which is open towards the inside and in which the carrying elements are retained.

13. Filling machine according to Claim 8, **characterized by** a groove in the second ring part (28) and in that the carrying elements are mounted on the supply container (10), and can be moved in the radial direction, such that they can engage in the groove in the second ring part (28).

## Revendications

1. Machine de remplissage comprenant un bâti (14) et une trémie (10) pouvant pivoter d'une position de travail vers une position rabattue, un dispositif d'alimentation (20), entraîné en rotation, étant disposé devant la sortie (16) de ladite trémie de manière à être rabattu conjointement avec celle-ci, **caractérisée par**
une bague d'entraînement en deux parties pour le dispositif d'alimentation (20),
dont la première partie de bague (24) est logée contre le bâti (14) de la machine et est actionnée à cet emplacement,
dont la deuxième partie de bague (28) porte le dispositif d'alimentation (20) et peut être rabattue conjointement avec la trémie (10) et, dans la position de travail de la trémie (10), est couplée avec la première partie de bague (24), de telle sorte que la première partie de bague (24) absorbe des forces agissant sur le dispositif d'alimentation (20) et entraîne en rotation la deuxième partie de bague (28) en vue d'actionner le dispositif d'alimentation (20).

2. Machine de remplissage selon la revendication 1, **caractérisée en ce que** la deuxième partie de bague (28), dans la position de travail de la trémie (10), entre en prise dans la première partie de bague (24), de telle sorte que la première partie de bague (24) absorbe des forces agissant sur le dispositif d'alimentation (20) et entraîne en rotation la deuxième partie de bague (28) en vue d'actionner le dispositif d'alimentation (20).

3. Machine de remplissage selon la revendication 1 ou 2, **caractérisée en ce que** la bague d'entraînement est disposée sensiblement horizontalement et est partagée dans le sens horizontal.

4. Machine de remplissage selon une des revendications précédentes, **caractérisée en ce que** la première, de même que la deuxième partie de bague (24, 28) comportent des saillies (34, 38) entre lesquelles sont agencés dans le sens circulaire des interstices, et **en ce que** les saillies (34, 38), dans la position de travail de la trémie (10), entrent en prise dans les interstices entre chacune des autres saillies (34, 38) en vue d'une transmission par conjugaison de forme des forces d'entraînement.

5. Machine de remplissage selon la revendication 4, **caractérisée en ce que** les interstices sont plus grands que les saillies (34, 38) qui entrent en prise avec eux.

6. Machine de remplissage selon une des revendications précédentes, **caractérisée par** des moyens de centrage destinés à centrer le dispositif d'alimentation (20), y compris la deuxième partie de bague (28) par rapport à la première partie de bague (24).

7. Machine de remplissage selon une des revendications précédentes, **caractérisée en ce que** la deuxième partie de bague (28) comporte un prolongement axial avec une surface périphérique (40) centrée, se rétrécissant en forme de cône vers la première partie de bague (24), laquelle surface, dans la position de travail de la trémie (10) entre en prise dans un logement correspondant de la première partie de bague (24).

8. Machine de remplissage selon une des revendications précédentes, **caractérisée par** des éléments de support (34), qui maintiennent de manière amovible la deuxième partie de bague (28) contre la trémie (10) pivotante et sont disposés de telle sorte qu'ils ne sont pas sous charge lorsque la trémie (10) n'est pas dans la position de travail.

9. Machine de remplissage selon les revendications 4 et 8, **caractérisée en ce que** les éléments de support (34) comportent des tétons (34) qui s'étendent sensiblement radialement vers l'extérieur à partir de la deuxième partie de bague (28), lesquels forment des saillies (34) utilisées pour actionner le dispositif d'alimentation (20), coopérant avec les saillies (38) correspondantes de la première partie de bague (24).

10. Machine de remplissage selon la revendication 8 ou 9, **caractérisée par** une rainure (32), ouverte vers l'intérieur, concentrique à la trémie (10), et des manchons coulissants (36) sur les éléments de support (34) de la deuxième partie de bague (28), qui, pour maintenir la deuxième partie de bague (28), peuvent coulisser contre la trémie (10) de telle sorte que qu'ils entrent en prise dans la rainure (32).

11. Machine de remplissage selon la revendication 8 ou 9, **caractérisée par** une rainure (32), ouverte vers l'intérieur, concentrique à la trémie (10), et en ce que les éléments de support sont mobiles dans le sens radial contre la deuxième partie de bague (28) de telle sorte que, pour maintenir la deuxième partie de bague (28) contre la trémie (10), ils peuvent entrer en prise dans la rainure (32).

12. Machine de remplissage selon la revendication 8 ou 9, **caractérisée par** un évidement annulaire de la trémie, dans lequel peuvent être insérés les éléments de support, ainsi que par un couvercle amovible permettant de couvrir l'évidement de telle sorte qu'il se forme une rainure ouverte vers l'intérieur, concentrique à la trémie, dans laquelle peuvent entrer en prise les éléments de support.

13. Machine de remplissage selon la revendication 8, **caractérisée par** une rainure dans la deuxième partie de bague (28) et en ce que les éléments de support sont logés contre la trémie (10) et sont mobiles dans le sens radial de telle sorte qu'ils peuvent entrer en prise dans la rainure dans la deuxième partie de bague (28).
